(19) Europäisches Patentamt
European Patent Office
Office européen des brevets

(11) **EP 2 554 964 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.03.2021 Patentblatt 2021/10**

(45) Hinweis auf die Patenterteilung:
**13.04.2016 Patentblatt 2016/15**

(21) Anmeldenummer: **12175538.3**

(22) Anmeldetag: **09.07.2012**

(51) Int Cl.:
*G01K 7/20* (2006.01)      *G01L 9/00* (2006.01)
*G01L 19/00* (2006.01)

(54) **Druck- und Temperaturmessvorrichtung**

Pressure and temperature measuring device

Dispositif de mesure de la pression et de la température

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011 DE 102011109461**

(43) Veröffentlichungstag der Anmeldung:
**06.02.2013 Patentblatt 2013/06**

(73) Patentinhaber: **Sensata Germany GmbH**
**32423 Minden (DE)**

(72) Erfinder: **Schier, Achim**
**32479 Hille (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
| | |
|---|---|
| **DE-A1- 4 415 984** | **DE-A1- 19 754 613** |
| **DE-T2- 69 423 100** | **US-A- 2 738 678** |
| **US-A- 5 756 899** | |

EP 2 554 964 B2

**Beschreibung**

Die vorliegende Erfindung betrifft eine Messvorrichtung zur Messung eines Fluiddrucks und einer Temperatur des Fluids.

Eine derartige kombinierte Messvorrichtung ist beispielsweise aus dem Dokument DE 10 2010 012 823 A1 bekannt. Dort ist ein Druckmessumformer mit einem Gehäuse und wenigstens einer in dem Gehäuse ausgebildeten Bohrung offenbart, in die ein Thermoelement bestehend aus einem Gehäuse, einem Rohr und einem Temperatursensor eingesetzt ist. Die Produktion einer solchen Messvorrichtung ist jedoch relativ aufwendig und daher kostenintensiv. Eine Messvorrichtung mit den Merkmalen des Oberbegriffs des Anspruchs 1 ist aus der US 5,756,899 bekannt.

Der vorliegenden Erfindung liegt die Aufgabe zugrunde, eine Messvorrichtung der eingangs genannten Art zu schaffen, die kostengünstig herstellbar ist.

Das Dokument DE 694 23 100 (T2) beschreibt einen Drucksensor, der ein Halbleitersubstrat umfasst, auf dem vier druckempfindliche Widerstände aufgebracht sind. Vorzugsweise sind die Widerstände des Drucksensors Dünnschicht-Widerstandselemente aus Polysilizium. Darüber hinaus ist ein Abtastwiderstand vorgesehen, der Teil einer von dem Drucksensor separaten Signalaufbereitungs-Schaltkreisanordnung ist. Das Dokument DE 197 54 613 A1 beschreibt einen Drucksensor mit einer Druck-Messbrücke mit Dehnungsmesser, die in Dünnschichttechnologie hergestellt sind.

Diese Aufgabe wird durch eine Messvorrichtung mit den Merkmalen des Anspruchs 1 gelöst.

Die vorliegende Erfindung schafft demgemäß einen Druckmessumformer, der als Dünnschicht- bzw. Dünnfilmsensor ausgeführt ist, sowie einen in gleicher Technologie integriert hergestellten Temperaturmessumformer, wobei beide Messumformer in bzw. auf einem Sensorelement integriert sind. Die Herstellung der Messumformer für Druck und Temperatur erfolgt jeweils in Dünnschicht- bzw. Dünnfilmtechnologie, d.h. mittels physikalischer Gasphasenabscheidung (PVD) und/oder chemischer Gasphasenabscheidung (CVD). Erfindungsgemäß können also die Widerstandselemente des Druckmessumformers mit den Widerstandselementen des Temperaturmessumformers auf einem Dünnschicht-Sensorelement integriert werden, so dass letztlich nur ein einziger und/oder kombinierter Messumformer vorliegt. Hierdurch wird eine kostengünstige Herstellung der Messvorrichtung ermöglicht.

Die der Druckmessung zugeordnete Widerstands-Messbrücke ist bevorzugt als Wheatstone'sche Messbrücke, insbesondere als Vollbrücke mit vier Widerstandselementen oder als Halbbrücke mit zwei Widerstandselementen, ausgebildet, um die dem Fluiddruck proportionale Brückenspannung, d.h. ein druckabhängiges Spannungssignal zu erzeugen. Die der Temperaturmessung zugeordnete, von der der Druckmessung zugeordneten Widerstands-Messbrücke separat ausgebildete Widerstands-Messbrücke ist bevorzugt ebenfalls als Wheatstone'sche Messbrücke, insbesondere als Voll- oder Halbbrücke, ausgebildet, um die der Fluidtemperatur proportionale Brückenspannung, d.h. ein temperaturabhängiges Spannungssignal zu erzeugen. Vorzugsweise ist dem Sensorelement eine Verarbeitungs- und/oder Auswerteeinheit, insbesondere in Form einer Elektronik, nachgeschaltet, durch die die Signale der beiden Messbrücken verstärkt, linearisiert und/oder anderweitig weiter verarbeitet werden können. Insbesondere umfasst die jeweilige Messbrücke zum Abgreifen der jeweiligen Brückenspannung einen jeweiligen, insbesondere eigenen Messabgriff.

Bevorzugt ist es, wenn die der Druckmessung zugeordneten Widerstandselemente temperaturunabhängig sind, und/oder die der Temperaturmessung zugeordneten Widerstandselemente druckunabhängig sind, wobei an dieser Stelle und nachstehend unter temperaturunabhängig bzw. druckunabhängig auch zumindest im Wesentlichen temperaturunabhängig bzw. druckunabhängig verstanden werden soll. Hierdurch wird erreicht, dass das jeweilige Spannungssignal von der jeweils anderen Messgröße nicht beeinflusst wird, wodurch die Auswertung des jeweiligen Spannungssignals vereinfacht wird. Grundsätzlich kann ein Temperaturabgleich der der Druckmessung zugeordneten Widerstands-Messbrücke, sofern sie eine Temperaturabhängigkeit aufweist, aber beispielsweise auch durch weitere, mit der Widerstands-Messbrücke verschaltete Widerstände erfolgen.

Erfindungsgemäß umfasst die der Temperaturmessung zugeordnete Widerstands-Messbrücke wenigstens ein temperaturunabhängiges Widerstandselement. Insbesondere weist ein temperaturunabhängiges Widerstandselement keine oder im Verhältnis zu einem temperaturabhängigen Widerstandselement eine wesentlich geringere Temperaturabhängigkeit auf. Hierdurch kann die Auswertung des Spannungssignals der der Temperaturmessung zugeordneten Widerstands-Messbrücke vereinfacht werden.

Insbesondere für den Fall, dass sie als Halbbrücke ausgebildet ist, kann die der Temperaturmessung zugeordnete Widerstands-Messbrücke genau ein temperaturabhängiges und/oder genau ein temperaturunabhängiges Widerstandselement umfassen.

Bevorzugt sind die der Druckmessung zugeordneten Widerstandselemente und das vorgenannte, wenigstens eine der Temperaturmessung zugeordnete temperaturunabhängige Widerstandselement aus demselben Material gefertigt, und/oder sind das wenigstens eine der Temperaturmessung zugeordnete temperaturabhängige Widerstandselement und Anschlüsse für die beiden Widerstands-Messbrücken aus demselben Material gefertigt. Hierdurch wird ermöglicht, die beiden Messbrücken und deren Anschlüsse für eine elektrische Kontaktierung, insbesondere Bondpads, mit lediglich zwei Abscheidevorgängen aufzubringen.

Vorzugsweise wird die Geometrie des vorgenannten, wenigstens einen der Temperaturmessung zugeordneten temperaturunabhängigen Widerstandselements derart gewählt, dass es keine Druckabhängigkeit aufweist.

Das vorgenannte, wenigstens eine der Temperaturmessung zugeordnete temperaturunabhängige Widerstandselement ist aus dem ersten Material gefertigt, und die Anschlüsse für die beiden Widerstands-Messbrücken sind aus dem zweiten, von dem ersten Material verschiedenen Material gefertigt.

Die Aufbringung der der Druckmessung zugeordneten Widerstandselemente und/oder wenigstens eines der Temperaturmessung zugeordneten temperaturunabhängigen Widerstandselements kann in einer ersten Gasphasenabscheidung erfolgen, und die Aufbringung des wenigstens einen der Temperaturmessung zugeordneten temperaturabhängigen Widerstandselements und/oder von Anschlüssen für die beiden Widerstands-Mess-brücken in einer zweiten Gasphasenabscheidung.

Bei dem Material der der Druckmessung zugeordneten Widerstandselemente und dem vorgenannten, wenigstens einen der Temperaturmessung zugeordneten temperaturunabhängigen Widerstandselement handelt es sich bevorzugt um ein Material, dessen elektrischer Widerstand durch Deformation stark veränderlich ist, aber keine oder nur eine geringe Temperaturempfindlichkeit aufweist, beispielsweise Titanoxinitrid. Bei dem Material des wenigstens einen der Temperaturmessung zugeordneten temperaturabhängigen Widerstandselements und der Anschlüsse für die beiden Widerstands-Messbrücken handelt es sich bevorzugt um ein Material, dessen elektrischer Widerstand deutlich temperaturabhängig ist, beispielsweise Nickel.

Nach einer Ausbildung der Erfindung sind die der Druckmessung zugeordneten Widerstandselemente und/oder das vorgenannte, wenigstens eine der Temperaturmessung zugeordnete temperaturunabhängige Widerstandselement auf der Membran aufgebracht, und/oder ist das wenigstens eine der Temperaturmessung zugeordnete temperaturabhängige Widerstandselement zumindest teilweise auf einem insbesondere starren, die Membran an deren Peripherie abstützenden Rahmen oder Grundkörper aufgebracht. Sofern das Material des wenigstens einen der Temperaturmessung zugeordneten temperaturabhängigen Widerstandselements grundsätzlich eine Druckabhängigkeit aufweist, kann hierdurch eine Druckabhängigkeit des wenigstens einen der Temperaturmessung zugeordneten temperaturabhängigen Widerstandselements trotzdem verhindert werden.

Insbesondere sind die der Druckmessung zugeordneten Widerstände und die der Temperaturmessung zugeordneten Widerstände in und/oder auf dem Sensorelement integriert sind.

Insbesondere sind die der Druckmessung zugeordneten Widerstände und die der Temperaturmessung zugeordneten Widerstände auf einer für alle Widerstände gemeinsamen, durch die Membran und einen die Membran an deren Peripherie abstützenden Rahmen gebildeten ebenen Oberfläche des Sensorelements angeordnet.

Bevorzugt sind der oder die druckabhängigen Widerstandselemente der der Druckmessung zugeordneten Widerstands-Messbrücke jeweils als bzw. wie ein Dehnungsmessstreifen oder nach Art eines Dehnungsmessstreifens ausgebildet. Die Druckabhängigkeit des oder der druckabhängigen Widerstandselemente kann beispielsweise auf einer Änderung des Widerstands durch eine Längen- und Querschnittsänderung der Dehnungsmessstreifen oder auf einer Änderung des Widerstands durch einen piezoresistiven Effekt basieren.

Nach einer anderen Ausbildung der Erfindung sind die beiden Messbrücken derart ausgebildet, dass sie voneinander unabhängig den Messgrößen Druck und Temperatur proportionale Spannungssignale erzeugen. Ein Defekt der einen Messbrücke beeinträchtigt daher nicht die Funktion der anderen Messbrücke. Insbesondere sind die beiden Messbrücken parallel zueinander geschaltet.

Nach einer weiteren Ausbildung der Erfindung sind die beiden Messbrücken derart ausgebildet, dass sie eine gemeinsame Spannungsversorgung und/oder wenigstens einen gemeinsamen Anschluss aufweisen. Hierdurch können Synergien genutzt werden.

Die Erfindung betrifft ferner ein Verfahren nach Anspruch 10 zur Herstellung einer Messvorrichtung zur Messung eines Fluiddrucks und zur Messung einer Temperatur des Fluids.

Grundsätzlich ist es möglich, dass die Widerstandselemente der beiden Messbrücken mit lediglich zwei oder mit mehr als lediglich zwei Abscheidevorgängen auf das Sensorelement aufgebracht werden. Beispielsweise können mit einer ersten Abscheidung lediglich druckabhängige Widerstandselemente, mit einer zweiten Abscheidung lediglich temperaturabhängige Widerstandselemente und mit einer dritten Abscheidung sowohl druck- als auch temperaturunabhängige Widerstandselemente aufgebracht werden, wobei die Reihenfolge der Abscheidungen grundsätzlich beliebig gewählt werden kann.

Vorteilhafte Ausführungsformen des Verfahrens ergeben sich in analoger Weise aus den Weiterbildungen der erfindungsgemäßen Messvorrichtung.

Weitere vorteilhafte Ausführungsformen der Erfindung sind auch in den Unteransprüchen, der Figurenbeschreibung und der Zeichnung angegeben.

Die Erfindung wird im Folgenden beispielhaft unter Bezugnahme auf die Zeichnung beschrieben. Es zeigen,

Fig. 1      eine schematische Darstellung eines Längsschnitts durch eine erfindungsgemäße kombinierte Druck- und Temperaturmessvorrichtung,

Fig. 2      ein Schaltbild zweier Messbrücken der erfindungsgemäßen Messvorrichtung aus Fig. 1, und

Fig. 3    ein Layout der beiden Messbrücken aus Fig. 2 gemäß einer erfindungsgemäßen Ausführungsform.

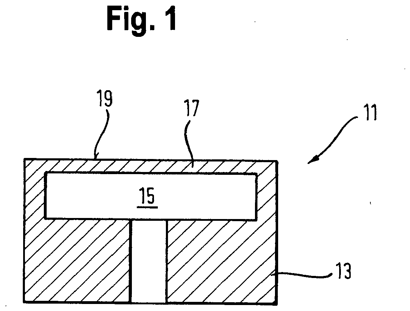

Die in Fig. 1 gezeigte Messvorrichtung, die in einen kombinierten Druck- und Temperatursensor eingesetzt ist, umfasst ein Sensorelement 11 mit einem starren Rahmen 13, in dem eine Fluidkammer 15 ausgebildet ist. Zur Messung eines Fluiddrucks wird eine Seite einer an ihrer Peripherie an dem Rahmen 13 abgestützten Membran 17 des Sensorelements 11 mit einem in der Fluidkammer 15 befindlichen, zu messenden Fluid, insbesondere einer Flüssigkeit und/oder einem Gas, beaufschlagt. Die andere Seite der Membran 17, die dem Fluid abgewandt ist, ist einem Referenzdruck, insbesondere dem Umgebungsdruck bzw. hydrostatischen Druck der den Sensor umgebenden Atmosphäre, ausgesetzt. Die Membran 17 kann einstückig oder separat von dem Rahmen 13 ausgebildet sein. Das Sensorelement 11 weist auf der der Fluidkammer 15 abgewandten Seite der Membran 17 eine ebene Oberfläche 19 auf, auf der dünne Schichten abgeschieden sind, wie nachstehend näher erläutert ist. Die Messvorrichtung ist in einem nicht dargestellten Gehäuse untergebracht, das in Richtung einer offenen Seite der Fluidkammer 15 einen funktionalen Anschluss aufweist, beispielsweise ein Gewinde, mit dem der Sensor an ein nicht gezeigtes Fluidgehäuse gekoppelt werden kann.

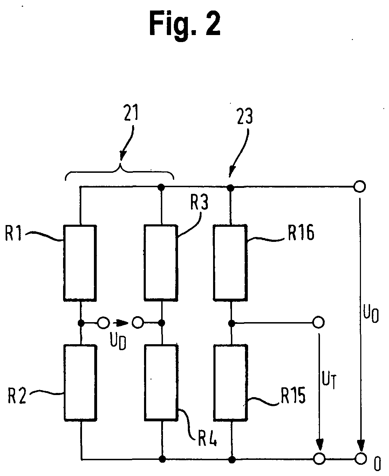

Bei einer Druckdifferenz zwischen ihren beiden Seiten wird die Membran 17 mechanisch ausgelenkt bzw. deformiert. Diese Deformation wird gemäß Fig. 2 durch vier elektrische Widerstandselemente R1-R4 einer Wheatstone'schen Widerstands-Messbrücke 21, die auf der der Fluidkammer 15 abgewandten Seite der Membran 17 aufgebracht sind, erfasst und in Form einer Brückenspannung

$$U_D = U_0 \frac{(R2*R3)-(R4*R1)}{(R1+R2)*(R3+R4)}$$

ausgegeben, wobei in an sich bekannter Weise aus dem Wert der Brückenspannung $U_D$ auf den anliegenden Fluiddruck rückgeschlossen werden kann. Bei $U_0$ handelt es sich um die Versorgungsspannung der Messbrücke 21. Die Messbrücke 21 bildet zusammen mit dem Sensorelement 11 einen Druckmessumformer.

Bei den Widerstandselementen R1-R4 handelt es sich um druckabhängige Widerstandselemente, d.h. eine Änderung des Fluiddrucks führt zu einer entsprechenden Änderung des Widerstandswert des jeweiligen Widerstandselements R1-R4. Die Widerstandselemente R1-R4 sind jeweils als Dehnungsmessstreifen ausgebildet und in Dünnschichttechnologie, insbesondere mittels PVD und/oder CVD, auf der ebenen Oberfläche 19 des Sensorelements 11, insbesondere auf der Membran 17, aufgebracht. Die Widerstandselemente R1-R4 wurden mit einer einzigen, gemeinsamen Abscheidung aufgebracht, d.h. sie bestehen alle aus demselben Material, das darüber hinaus keine Temperaturabhängigkeit aufweist, beispielsweise Titanoxinitrid.

Die Widerstandselemente R1-R4 sind dabei insbesondere derart geformt und/oder auf der Membran 17 angeordnet, dass mit steigender Druckdifferenz an der Membran 17 der elektrische Widerstand der beiden im Ersatzschaltbild der Messbrücke 21 diagonal gegenüberliegenden Widerstandselemente R1 und R4 beispielsweise abnimmt, während der elektrische Widerstand der beiden im Ersatzschaltbild der Messbrücke 21 diagonal gegenüberliegenden Widerstandselemente R2 und R3 zunimmt, oder umgekehrt. Grundsätzlich ist es jedoch ausreichend, wenn lediglich ein, zwei oder drei der Widerstandselemente R1-R4 druckabhängig sind. Nichtdruckabhängige Widerstandselemente können z. B. durch entsprechende geometrische Formgebung oder Anordnung oder durch separate Abscheidung mit einem anderen Material erzeugt werden.

Darüber hinaus sind auf der ebenen Oberfläche 19 des Sensorelements 11 zwei weitere elektrische Widerstandselemente R 15 und R16 einer weiteren Widerstands-Messbrücke 23, die parallel zu der Messbrücke 21 geschaltet ist, in Dünnschichttechnologie aufgebracht, mit der eine weitere Brückenspannung

$$U_T = U_0 \frac{R15}{R15+R16}$$

erzeugt werden kann, wobei in an sich bekannter Weise aus dem Wert der weiteren Brückenspannung $U_T$ auf die Temperatur des anliegenden Fluids rückgeschlossen werden kann. Die Messbrücke 23 bildet zusammen mit dem Sensorelement 11 einen Temperaturmessumformer, der unabhängig von dem Druckmessumformer arbeitet.

Hierzu ist das weitere Widerstandselement R15 temperaturabhängig ausgebildet. Das weitere Widerstandselement R15 wurde mittels einer weiteren, von der vorgenannten Abscheidung separaten Abscheidung auf das Sensorelement 11 aufgebracht und besteht aus einem temperaturabhängigen Material, das von dem Material der Widerstandselemente R1-R4 verschieden ist, beispielsweise aus einer Nickel-Schicht. Das weitere Widerstandselement R15 weist bereits aufgrund des hierfür verwendeten Materials keine Druckabhängigkeit auf und ist darüber hinaus nicht auf der Membran 17, sondern außerhalb hiervon, auf dem Rahmen 13, der keiner Deformation unterworfen ist, aufgebracht.

Das weitere Widerstandselement R16 hingegen wurde bereits zusammen mit den Widerstandselementen R1-R4 auf die Membran 17 aufgebracht, d.h. das weitere Widerstandselement R16 besteht aus demselben Material wie die Widerstandselemente R1-R4 und ist temperaturunabhängig. Die Form und Anordnung des weiteren Widerstandselements R16 ist dabei derart gewählt, dass es - im Gegensatz zu den Widerstandselementen R1-R4 - keine Druckabhängigkeit aufweist. Die Widerstandselemente R1-R4 und R16 können grundsätzlich auch erst nach dem Widerstandselement R 15 abgeschieden werden.

Bei der Herstellung der beschriebenen Messvorrichtung werden also nacheinander wenigstens zwei Schichten für die Druckmessung und für die Temperaturmessung abgeschieden, die jeweils beispielsweise mittels fotolithographischer Verfahren derart strukturiert werden, dass elektrische Widerstände gebildet und verschaltet werden, die getrennt druck- bzw. temperaturabhängig sind. Die einzelnen Schichten weisen jeweils insbesondere eine Dicke bzw. Höhe von höchstens 3 $\mu$m, bevorzugt höchstens 1 $\mu$m, und einen elektrischen Widerstand im Bereich von 0,1 kOhm bis 50 kOhm, bevorzugt im Bereich von 0,5 kOhm bis 10 kOhm, pro Widerstand auf. Bei einer derartigen Schicht kann es sich jeweils auch um eine Mehrlagenschicht handeln, wobei dann wenigstens eine Lage als funktionale Lage ausgebildet ist. Die Schichten für die Druckmessung und die Temperaturmessung sind dabei in mindestens einer Lage in ihrer stofflichen Zusammensetzung voneinander verschieden.

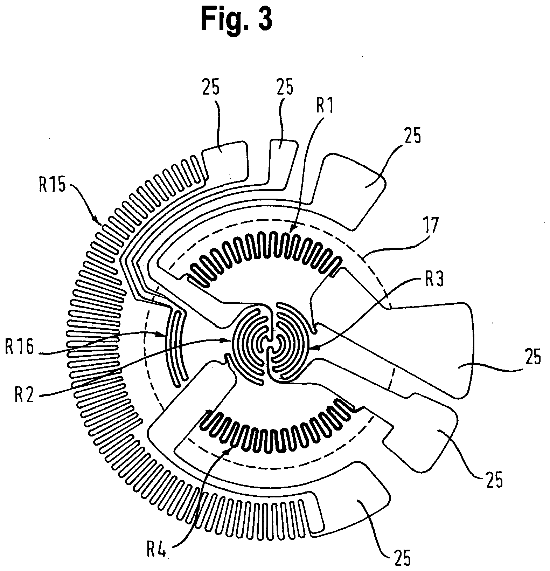

In Fig. 3 sind die beiden Messbrücken 21, 23 gemäß einem beispielhaften Layout bzw. in einer Draufsicht gezeigt. Die in dem gezeigten Fall kreisrunde Erstreckung der Membran 17 ist strichliniert dargestellt. Wie aus Fig. 3 ersichtlich ist, sind die Widerstandselemente R1-R4, R15 und R16 der beiden Messbrücken 21, 23 zur elektrischen Kontaktierung mit Anschlüssen in Form von Bondpads 25 versehen. Die Anschlüsse 25 wurden zusammen mit dem weiteren Widerstandselement R15 abgeschieden.

Die vorliegende Erfindung beschreibt die Integration eines Messumformers für Druck und eines Messumformers für Temperatur, die beide in derselben Technologie, nämlich der Dünnschichttechnologie, hergestellt sind. Dies ermöglicht eine insgesamt kostengünstige Herstellung.

Bezugszeichenliste

| 11 | Sensorelement |
| 13 | Rahmen |
| 15 | Fluidkammer |
| 17 | Membran |
| 19 | Oberfläche |
| 21 | Messbrücke |
| 23 | weitere Messbrücke |
| 25 | Bondpad |
| R1 | Widerstandselement |
| R2 | Widerstandselement |
| R3 | Widerstandselement |
| R4 | Widerstandselement |
| R15 | weiteres Widerstandselement |
| R16 | weiteres Widerstandselement |
| $U_0$ | Versorgungsspannung |
| $U_D$ | Brückenspannung |
| $U_T$ | weitere Brückenspannung |

**Patentansprüche**

1. Messvorrichtung zur Messung eines Fluiddrucks und einer Temperatur des Fluids, wobei für beide Messungen ein gemeinsames, eine Fluidkammer (15) und eine Membran (17) aufweisendes Sensorelement (11) vorgesehen ist, auf das auf der der Fluidkammer (15) abgewandten Seite der Membran (17) sowohl eine der Druckmessung zugeordnete Widerstands-Messbrücke (21) mit wenigstens einem druckabhängigen Widerstandselement (R1-R4) zur Erzeugung einer dem Fluiddruck proportionalen Brückenspannung ($U_D$) als auch eine der Temperaturmessung zugeordnete, von der der Druckmessung zugeordneten Widerstands-Messbrücke (21) separat ausgebildete Widerstands-Messbrücke (23) mit wenigstens einem temperaturabhängigen Widerstandselement (R15) zur Erzeugung einer der Fluidtemperatur proportionalen Brückenspannung ($U_T$) aufgebracht sind,
**dadurch gekennzeichnet,**
**dass** die der Druckmessung zugeordnete Widerstands-Messbrücke (21) und die der Temperaturmessung zugeordnete Widerstands-Messbrücke (23) jeweils in Dünnschichttechnologie aufgebracht sind, wobei die der Druckmessung zugeordneten Widerstandselemente (R1-R4) aus einem ersten Material gefertigt sind und das wenigstens eine der Temperaturmessung zugeordnete temperaturabhängige Widerstandselement (R15) aus einem zweiten, von dem ersten Material verschiedenen Material gefertigt ist, und wobei die der Temperaturmessung zugeordnete Widerstands-Messbrücke (23) wenigstens ein temperaturunabhängiges Widerstandselement (R16) umfasst.

2. Messvorrichtung nach Anspruch 1,
**dadurch gekennzeichnet,**
**dass** die der Druckmessung zugeordneten Widerstandselemente (R1-R4) temperaturunabhängig sind, und/oder dass die der Temperaturmessung zugeordneten Widerstandselemente (R15, R16) druckunabhängig sind.

3. Messvorrichtung nach zumindest einem der vorstehenden Ansprüche,
**dadurch gekennzeichnet,**
**dass** die der Druckmessung zugeordneten Widerstandselemente (R1-R4) und wenigstens ein der Temperaturmessung zugeordnetes temperaturunabhängiges Widerstandselement (R16) aus demselben Material gefertigt sind, und/oder dass das wenigstens eine der Temperaturmessung zugeordnete temperaturabhängige Widerstandselement (R15) und Anschlüsse (25) für die beiden Widerstands-Messbrücken (21, 23) aus demselben Material gefertigt sind.

4. Messvorrichtung nach zumindest einem der vorstehenden Ansprüche,
   **dadurch gekennzeichnet,**
   **dass** wenigstens ein der Temperaturmessung zugeordnetes temperaturunabhängiges Widerstandselement (R16) aus dem ersten Material gefertigt ist und Anschlüsse (25) für die beiden Widerstands-Messbrücken (21, 23) aus dem zweiten, von dem ersten Material verschiedenen Material gefertigt sind.

5. Messvorrichtung nach zumindest einem der vorstehenden Ansprüche,
   **dadurch gekennzeichnet,**
   **dass** die der Druckmessung zugeordneten Widerstandselemente (R1-R4) und/oder wenigstens ein der Temperaturmessung zugeordnetes temperaturunabhängiges Widerstandselement (R16) auf der Membran (17) aufgebracht sind, und/oder dass das wenigstens eine der Temperaturmessung zugeordnete temperaturabhängige Widerstandselement (R15) zumindest teilweise auf einem die Membran (17) an deren Peripherie abstützenden Rahmen (13) aufgebracht ist.

6. Messvorrichtung nach zumindest einem der vorstehenden Ansprüche,
   **dadurch gekennzeichnet,**
   **dass** die der Druckmessung zugeordneten Widerstände (R1-R4) und die der Temperaturmessung zugeordneten Widerstände (R15, R16) in und/oder auf dem Sensorelement (11) integriert sind.

7. Messvorrichtung nach zumindest einem der vorstehenden Ansprüche,
   **dadurch gekennzeichnet,**
   **dass** der oder die druckabhängigen Widerstandselemente (R1-R4) der der Druckmessung zugeordneten Widerstands-Messbrücke (21) jeweils als ein Dehnungsmessstreifen ausgebildet sind.

8. Messvorrichtung nach zumindest einem der vorstehenden Ansprüche,
   **dadurch gekennzeichnet,**
   **dass** die beiden Messbrücken (21, 23) derart ausgebildet sind, dass sie voneinander unabhängig den Messgrößen Druck und Temperatur proportionale Spannungssignale ($U_D$, $U_T$) erzeugen.

9. Messvorrichtung nach zumindest einem der vorstehenden Ansprüche,
   **dadurch gekennzeichnet,**
   **dass** die beiden Messbrücken (21, 23) derart ausgebildet sind, dass sie eine gemeinsame Spannungsversorgung ($U_0$) und/oder wenigstens einen gemeinsamen Anschluss (25) aufweisen.

10. Verfahren zur Herstellung einer Messvorrichtung zur Messung eines Fluiddrucks und zur Messung einer Temperatur des Fluids, insbesondere nach einem der vorhergehenden Ansprüche, wobei auf einem für beide Messungen gemeinsamen, eine Fluidkammer (15) und eine Membran (17) aufweisenden Sensorelement (11) nacheinander auf der der Fluidkammer (15) abgewandten Seite der Membran (17) wenigstens ein einer Widerstands-Messbrücke (21) der Druckmessung zugeordnetes druckabhängiges Widerstandselement (R1 - R4) zur Erzeugung einer dem Fluiddruck proportionalen Brückenspannung ($U_D$) und wenigstens ein einer von der der Druckmessung zugeordneten Widerstands-Messbrücke (21) separat ausgebildeten Widerstands-Messbrücke (23) der Temperaturmessung zugeordnetes temperaturabhängiges Widerstandselement (R15) zur Erzeugung einer der Fluidtemperatur proportionalen Brückenspannung ($U_T$) aufgebracht werden,
    **dadurch gekennzeichnet,**
    **dass** die Widerstands-Messbrücke (21) der Druckmessung und die Widerstands-Messbrücke (23) der Temperaturmessung jeweils mittels einer Gasphasenabscheidung aufgebracht werden, wobei die der Druckmessung zugeordneten Widerstandselemente (R1-R4) aus einem ersten Material gefertigt sind und das wenigstens eine der Temperaturmessung zugeordnete temperaturabhängige Widerstandselement (R15) aus einem zweiten, von dem ersten Material verschiedenen Material gefertigt ist, und wobei die der Temperaturmessung zugeordnete Widerstands-Messbrücke (23) wenigstens ein temperaturunabhängiges Widerstandselement (R16) umfasst.

11. Verfahren nach Anspruch 10,
    **dadurch gekennzeichnet,**
    **dass** die Aufbringung der der Druckmessung zugeordneten Widerstandselemente (R1-R4) und/oder wenigstens eines der Temperaturmessung zugeordneten temperaturunabhängigen Widerstandselements (R16) in einer ersten Gasphasenabscheidung erfolgt, und die Aufbringung des wenigstens einen der Temperaturmessung zugeordneten temperaturabhängigen Widerstandselements (R15) und/oder von Anschlüssen (25) für die beiden Widerstands-Messbrücken (21, 23) in einer zweiten Gasphasenabscheidung erfolgt.

**Claims**

1. A measuring apparatus for measuring a fluid pressure and a temperature of the fluid, wherein a common sensor element (11) is provided for both measurements which has a fluid chamber (15) and a membrane (17) and onto which both a resistance measurement bridge (21) associated with the pressure measurement and having at least one pressure-dependent resistor element (R1-R4) for generating a bridge voltage ($U_D$) which is proportional to the fluid pressure and a resistance measurement bridge (23) associated with the temperature measurement that is formed separately from the resistance measurement bridge (21) associated with the pressure measurement and having at least one temperature-dependent resistor element (R15) for generating a bridge voltage ($U_T$) proportional to the fluid temperature are applied at the side of the membrane (17) remote from the fluid chamber (15),
   **characterized in that**
   the resistance measurement bridge (21) associated with the pressure measurement and the resistance measurement bridge (23) associated with the temperature measurement are each applied in thin-film technology, with the resistor elements (R1-R4) associated with the pressure measurement being produced from a first material and the at least one temperature-dependent resistor element (R15) associated with the temperature measurement being produced from a second material different from the first material, and wherein the resistance measurement bridge (23) associated with the temperature measurement comprises at least one temperature-independent resistor element (R16).

2. A measuring apparatus in accordance with claim 1,
   **characterized in that**
   the resistor elements (R1-R4) associated with the pressure measurement are temperature-independent; and/or **in that** the resistor elements (R15, R16) associated with the temperature measurement are pressure-independent.

3. A measuring apparatus in accordance with at least one of the preceding claims,
   **characterized in that**
   the resistor elements (R1-R4) associated with the pressure measurement and at least one temperature-independent resistor element (R16) associated with the temperature measurement are produced from the same material; and/or **in that** the at least one temperature-dependent resistor element (R15) associated with the temperature measurement and connectors (25) for the two resistance measurement bridges (21, 23) are produced from the same material.

4. A measuring apparatus in accordance with at least one of the preceding claims,
   **characterized in that**
   at least one temperature-independent resistor element (R16) associated with the temperature measurement is produced from the first material and connectors (25) for the two resistance measurement bridges (21, 23) are produced from the second material different from the first material.

5. A measuring apparatus in accordance with at least one of the preceding claims,
   **characterized in that**
   the resistor elements (R1-R4) associated with the pressure measurement and/or at least one temperature-independent resistor element (R16) associated with the temperature measurement is/are applied to the membrane (17); and/or **in that** the at least one temperature-dependent resistor element (R15) associated with the temperature measurement is at least partly applied to a frame (13) supporting the membrane (17) at its periphery.

6. A measuring apparatus in accordance with at least one of the preceding claims,
   **characterized in that**
   the resistors (R1-R4) associated with the pressure measurement and the resistors (R15, R16) associated with the temperature measurement are integrated in and/or on the sensor element (11).

7. A measuring apparatus in accordance with at least one of the preceding claims,
   **characterized in that**
   the pressure-dependent resistor element or elements (R1-R4) of the resistance measurement bridge (21) associated with the pressure measurement is/are each formed as a strain gauge.

8. A measuring apparatus in accordance with at least one of the preceding claims,
   **characterized in that**
   the two measurement bridges (21, 23) are configured such that they generate voltage signals ($U_D$, $U_T$) proportional to the measurement parameters of pressure and temperature independently of one another.

9. A measuring apparatus in accordance with at least one of the preceding claims,
   **characterized in that**
   the two measurement bridges (21, 23) are configured such that they have a common voltage supply ($U_0$) and/or at least one common connector (25).

10. A method of manufacturing a measuring apparatus for measuring a fluid pressure and for measuring a temperature of the fluid, in particular in accordance with any one of the preceding claims, wherein at least one pressure-dependent resistor element (R1-R4) associated with a resistance measurement bridge (21) of the pressure measurement for generating a bridge voltage ($U_D$) proportional to the fluid pressure and at least one temperature-dependent resistor element (R15) associated with a resistance measurement bridge (23) of the temperature measurement that is formed separately from the resistance measurement bridge (21) associated with the pressure measurement for generating a bridge voltage ($U_T$) proportional to the fluid temperature are applied after one another at the side of a membrane (17) remote from a fluid chamber (15) to a sensor element (11) common to both measurements and having the fluid chamber (15) and the membrane (17),
**characterized in that**
the resistance measurement bridge (21) of the pressure measurement and the resistance measurement bridge (23) of the temperature measurement are each applied by means of vapor phase deposition, with the resistor elements (R1-R4) associated with the pressure measurement being produced from a first material and the at least one temperature-dependent resistor element (R15) associated with the temperature measurement being produced from a second material different from the first material, and wherein the resistance measurement bridge (23) associated with the temperature measurement comprises at least one temperature-independent resistor element (R16).

11. A method in accordance with claim 10,
**characterized in that**
the application of the resistor elements (R1-R4) associated with the pressure measurement and/or of at least one temperature-independent resistor element (R16) associated with the temperature measurement takes place in a first vapor phase deposition and the application of the at least one temperature-dependent resistor element (R15) associated with the temperature measurement and/or of connectors (25) for the two resistance measurement bridges (21, 23) takes place in a second vapor phase deposition.

**Revendications**

1. Dispositif de mesure pour la mesure d'une pression d'un fluide et d'une température du fluide, dans lequel il est prévu pour les deux mesures un élément capteur commun (11) comportant une chambre à fluide (15) et une membrane (17), élément sur lequel sont déposés, sur le côté de la membrane (17) détourné de la chambre à fluide (15), aussi bien un pont de mesure à résistance (21) associé à la mesure de pression, avec au moins un élément à résistance (R1-R4) dépendant de la pression pour engendrer une tension de pont ($U_D$) proportionnelle à la pression du fluide, qu'un pont de mesure à résistance (23) associé à la mesure de température, réalisé séparément du pont de mesure à résistance (21) associé à la mesure de pression, avec au moins un élément à résistance (R15) dépendant de la température pour engendrer une tension de pont ($U_T$) proportionnelle à la température du fluide,
**caractérisé en ce que**
le pont de mesure à résistance (21) associé à la mesure de pression et le pont de mesure à résistance (23) associé à la mesure de température sont respectivement déposés en technologie des couches minces, de sorte que les éléments à résistance (R1-R4) associés à la mesure de pression sont réalisés en un premier matériau et ledit au moins un élément à résistance (R15) dépendant de la température et associé à la mesure de température est réalisé en un second matériau différent du premier matériau, et dans lequel le pont de mesure à résistance (23) associé à la mesure de température inclut au moins un élément à résistance (R16) indépendant vis-à-vis de la température.

2. Dispositif de mesure selon la revendication 1,
**caractérisé en ce que** les éléments à résistance (R1-R4) associés à la mesure de pression sont indépendants vis-à-vis de la température, et/ou **en ce que** les éléments à résistance (R15, R16) associés à la mesure de température sont indépendants vis-à-vis de la pression.

3. Dispositif de mesure selon l'une au moins des revendications précédentes,
**caractérisé en ce que** les éléments à résistance (R1-R4) associés à la mesure de pression et au moins un élément à résistance (R16) indépendant vis-à-vis de la température et associé à la mesure de température sont réalisés du même matériau, et/ou **en ce que** ledit au moins un élément à résistance (R15) dépendant de la température est associé à la mesure de température, et les raccordements (25) pour les deux ponts de mesure à résistance (21, 23) sont réalisés du même matériau.

4. Dispositif de mesure selon l'une au moins des revendications précédentes,
**caractérisé en ce qu'**au moins un élément à résistance (R16) indépendant vis-à-vis de la température et associé à la mesure de température est réalisé du premier matériau, et les raccordements (25) pour les deux ponts de mesure à résistance (21, 23) sont réalisés avec le second matériau, différent du premier matériau.

5. Dispositif de mesure selon l'une au moins des revendications précédentes,
**caractérisé en ce que** les éléments à résistance (R1-R4) associés à la mesure de pression et/ou ledit au moins un élément à résistance (R16) indépendant vis-à-vis de la température et associé à la mesure de température sont déposés sur la membrane (17), et/ou **en ce que** ledit au moins un élément à résistance (R15) dépendant de la température et associé à la mesure de température est dépose au moins partiellement sur un cadre (13) qui soutient la membrane (17) à sa périphérie.

6. Dispositif de mesure selon l'une au moins des revendications précédentes,
**caractérisé en ce que** les résistances (R1-R4) associées à la mesure de pression et les résistances (R15, R16) associées à la mesure de température sont intégrées dans et/ou sur l'élément capteur (11).

7. Dispositif de mesure selon l'une au moins des revendications précédentes,
**caractérisé en ce que** le ou les élément(s) à résistance (R1-R4) dépendant de la pression, du pont de mesure à résistance (21) associé à la mesure de pression sont réalisés respectivement sous forme de jauges de contraintes.

8. Dispositif de mesure selon l'une au moins des revendications précédentes,
**caractérisé en ce que** les deux ponts de mesure (21, 23) sont réalisés de telle façon qu'ils engendrent indépendamment l'un de l'autre des signaux de tension ($U_D$, $U_T$) proportionnels aux grandeurs de mesure que sont la pression et la température.

9. Dispositif de mesure selon l'une au moins des revendications précédentes,
**caractérisé en ce que** les deux ponts de mesure (21, 23) sont réalisés de telle façon qu'ils comportent une alimentation de tension commune (UO) et/ou au moins un raccordement commun (25).

10. Procédé pour la réalisation d'un dispositif de mesure pour la mesure d'une pression d'un fluide et pour la mesure d'une température du fluide, en particulier selon l'une des revendications précédentes, dans lequel, sur un élément capteur (11) commun pour les deux mesures et comportant une chambre à fluide (15) et une membrane (17), on dépose l'un après l'autre, sur le côté de la membrane (17) détourné de la chambre à fluide (15), au moins un élément à résistance (R1-R4) dépendant de la pression et associé au pont de mesure à résistance (21) de la mesure de pression, pour engendrer une tension de pont ($U_D$) proportionnelle à la pression de fluide, et on dépose au moins un élément à résistance (R15) dépendant de la température et associé à un pont de mesure à résistance (23) de la mesure de température, réalisé séparément du pont de mesure à résistance (21) associé à la mesure de pression, pour engendrer une tension de pont (UT) proportionnelle à la température du fluide,
**caractérisé en ce que**
le pont de mesure à résistance (21) de la mesure de pression et le pont de mesure à résistance (23) de la mesure de température sont déposés respectivement au moyen d'une déposition en phase gazeuse, dans laquelle les éléments à résistance (R1-R4) associés à la mesure de pression sont réalisés en un premier matériau et ledit au moins un élément à résistance (R15) dépendant de la température et associé à la mesure de température est réalisé en un second matériau différent du premier matériau, et dans lequel le pont de mesure à résistance (23) associé à la mesure de température inclut au moins un élément à résistance (R16) indépendant vis-à-vis de la température.

11. Procédé selon la revendication 10,
**caractérisé en ce que** le dépôt des éléments à résistance (R1-R4) associés à la mesure de pression et/ou d'au moins un élément à résistance (R16) indépendant vis-à-vis de la température et associé à la mesure de température a lieu par un premier dépôt en phase vapeur, et le dépôt dudit au moins un élément à résistance (R15) dépendant de la température et associé à la mesure de température et/ou deux raccordements (25) pour les deux ponts de mesure à résistance (21, 23) a lieu par un second dépôt en phase vapeur.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010012823 A1
- US 5756899 A
- DE 69423100 T2
- DE 19754613 A1